# EUROPEAN PATENT APPLICATION

(11) **EP 3 367 309 A1**
(43) Date of publication of application: **29.08.2018**
(21) Application number: 17158365.1
(22) Date of filing: 28.02.2017
(51) Int. Cl.: G06N 3/04, G06N 3/063

(54) **METHOD AND APPARATUS TO DISTRIBUTE MEMORY REQUIREMENTS OF DEEP NEURAL NETWORKS**

(71) Applicant: Fujitsu Limited, Kanagawa 211-8588 (JP)
(72) Inventor: ALDEA LOPEZ, Sergio, London, W13 9AS (GB); AL-JARRO, Ahmed, London, W1T 6PF (GB); BHASKARAN, Balakrishnan, Exeter, Devon EX4 9DR (GB)
(74) Representative: Haseltine Lake LLP

(57) **Abstract**

A method of creating a modified Deep Neural Network (DNN) comprises carrying out a transformation process to transform an existing DNN in which a selected layer of neurons of the existing DNN is removed from the DNN and replaced by N replacement layers of neurons. Each replacement layer comprising a different sub-set of the set of neurons of the selected layer such that the N replacement layers, and logical connections set between the N replacement layers and the remainder of the DNN, are in aggregate functionally equivalent within the DNN to the selected layer. A weight initialization process is then carried out to initialise the weights of the transformed DNN, in which weights are generated locally and independently for each replacement layer such that each replacement layer is defined by the same statistical profile as the selected layer, whereby the N replacement layers are in aggregate statistically equivalent within the DNN to the selected layer.

## Description

Embodiments of the present invention relate to a method and apparatus to distribute memory requirements of deep neural networks.

Computational units in an artificial neural network (ANN) are modelled after neurons in the human brain, the neurons in the ANN being grouped by layers. Typically there is an input layer of neurons, an output layer of neurons, and hidden layers of neurons, for example convolution, pooling, rectified linear units, fully connected layers, etc. A Deep Neural Network (DNN) is an ANN with multiple hidden layers of computational units between input and output layers. Each computational unit combines different inputs, which are weighted, to compute a function. This function could be a linear combination of the weighted inputs, or something more elaborate such as a sigmoid function. When training an ANN, the outputs of the network are compared with a desired output using a loss function and an error value is calculated for each neuron in the output layer. The error values are then back-propagated until each neuron in the network has an error value. These error values are used to calculate the gradients of the loss function with respect to the weights in the network, the gradients in turn being used to update the weights in order to minimise the loss function.

DNNs offer the potential to achieve significant advancements in speech and image recognition, with accuracy performance exceeding those recorded by other sophisticated methods in Machine Learning. However, the training process of DNNs is an extremely computationally intensive task, which typically requires large computational resources, including memory (RAM) and training (execution) time. To address the long training times, several efforts have focused on improvements to speed up deep learning algorithms while exploiting the computational power of both specialised and mainstream hardware accelerators, including, for example, GPUs, Intel^{®} Xeon Phi™, FPGA, ASICs, etc. To address the large memory requirements, several distribution schemes have been proposed with focus on using more than one accelerator. To this end, several schemes have been reported that deal with distributing the memory or computational requirements of DNNs. For instance, when all memory requirements for representing a DNN can be stored in the memory of one accelerator; a distribution of the training data into a number of batches is typically used. Effectively, in the data-distribution approach, the entire network's model (neurons, weights and gradients) is replicated and stored on all accelerators. All accelerators compute the gradients based on their local input (training) data and a local copy of the weights. They then exchange gradients values, in a synchronous or asynchronous fashion, in order to update the weights across all accelerators. In this approach, only the input data is evenly distributed into batches across the devices. While data-distribution works well for relatively small DNN models, i.e. those that can be stored in the memory of one accelerator, one can easily conclude that this approach can impose a serious limitation on the size of DNNs that can be efficiently trained. Another limitation associated with memory availability on accelerators is that the training of DNNs can be limited to the relatively small batch sizes of the input (training) data. To address the memory limitation imposed by data-distribution, the distribution can be applied across the model dimension of the DNN instead, where different parts of the DNN model are stored and therefore trained on different accelerators. This means that whenever a model's part requires access to data that belong to another part of the DNN model, the two parts must exchange data. While existing approaches for model-distribution can provide a mechanism for distributing some of the memory requirements of DNNs, they do not automate the process to weights' and corresponding gradients' distribution, nor do they automatically take care of identifying the neurons whose states must be exchanged between the now distributed parts of the network. Instead, a user needs to be aware of how the neurons and corresponding weights are linked between the distributed layers. Subsequently, a user needs to decide how to assign each subset of weights and gradients to which part of the distribution and therefore the corresponding neurons that must be exchanged.

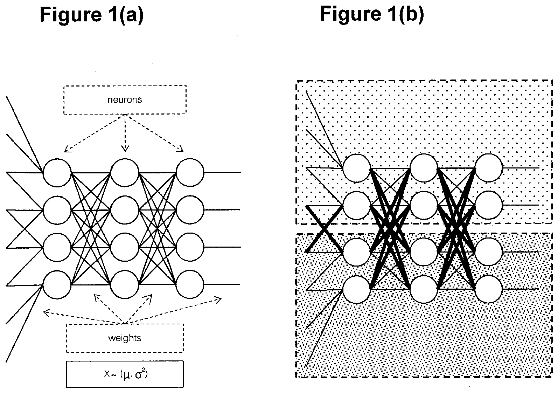

For illustration, Figure 1(a) of the accompanying drawings depicts a serial execution of a combination of layers (convolution and fully connected). The training process (forward/backward propagation) of DNNs relies on having access to the input data that is received (or generated) at the neurons (represented by circles) as well as their weights and corresponding gradients (both represented by the solid line connections). In this classical and non-distributed approach, since all data requirements are locally stored in one part of contiguous memory allocation, no data-exchange among different computational units is required. In the current approaches available for model-distribution, so called model-parallelism, one aims to distribute the memory requirements of both input data and the corresponding weights and gradients. A typical approach that is widely used in model-distribution is shown in Figure 1 (b) of the accompanying drawings. In this case, the user is responsible for defining the computations that take place for each distributed part (here two parts, indicated by the dashed line boxes) and for each layer of the model as well as corresponding exchange of data during the forward and backward stages. For example, the data required for exchange in this scenario, which therefore must be sent from one part of the network to another, are defined by the connection lines with solid thick edges. i.e. all neurons having connections that cross the partitions' boundaries must have their states exchanged. While this approach provides a mechanism for distributing the weights and therefore memory requirements of DNNs, it does not automate the process of weights distribution nor does it automatically take care of identifying the neurons for which it is necessary to exchange their states between the network's distributed parts. Instead, one needs to be aware of how the neurons and corresponding weights are linked between the distributed layers. Subsequently, one needs to decide how to assign each sub-set of weights to which part and which corresponding neurons require their states to be exchanged.

Typically, in the generation process of layers' weights, weights are randomly initialised by following a Gaussian distribution (*X*) with a specified mean and standard deviation that are denoted by µ and σ, respectively, where *X ∼*(*µ,σ*²)*.* The overall size of the weights is dependent on the number of neurons that are connected from one layer to the next. In particular, in fully connected layers, where every neuron is connected to every other neuron, the overall size of the weights and corresponding gradients can be substantially large. Therefore, the generation, management and storage of the overall resulting weights and corresponding gradients, as well as devising an even distribution for them, can be laborious and time consuming. Particularly, since the generation process of these random weights is generally best carried out in one step before the weights are split for allocation onto the distributed parts in a manner that maintains the efficiency of access to the portion of memory (RAM) they are stored in, it is necessary to be cautious of how the data specifying the weights and corresponding gradients is partitioned, distributed and therefore managed.

It is desirable to provide a more effective mechanism for distributing the memory requirements of deep learning algorithms.

According to an embodiment of a first aspect there is provided a computer-implemented method of creating a modified Deep Neural Network - DNN, wherein the method comprises carrying out: firstly, transforming an existing DNN by removing from the DNN a selected layer of neurons of the existing DNN, the selected layer comprising a set of neurons having a defined statistical profile, and replacing the selected layer by N replacement layers of neurons, N being an integer greater than 1, each replacement layer comprising a different sub-set of the set of neurons of the selected layer such that the N replacement layers, and logical connections set between the N replacement layers and the remainder of the DNN, are in aggregate functionally equivalent within the DNN to the selected layer; and, secondly, setting up the transformed DNN for execution comprising initializing the weights of the transformed DNN by generating weights locally and independently for each replacement layer with each replacement layer having the same defined statistical profile as the selected layer, whereby the N replacement layers are in aggregate statistically equivalent within the DNN to the selected layer. An embodiment of the method may further comprise outputting the transformed and initialized DNN to at least one processor and associated memory to execute each replacement layer independently.

In embodiments of the method, layers of an arbitrarily designed neural network are transformed into an equivalent network in which some, or all, of its layers are replaced by a number of smaller replacement layer parts that are statistically equivalent to the original layers but computationally much more efficient to execute. Specifically, for each layer being transformed, the new replacement layer parts hold the total number of weights thereof; however, they are now evenly distributed across the desired number of partitions. Thus, embodiments may provide a reliable and cost effective mechanism for distributing the memory requirements of untrained and trained DNNs in an automated, transparent and easy to manage manner, thus allowing for/facilitating the training of larger network sizes, batch sizes and/or image sizes. This is particularly useful for training large neural network models with sizes that do not fit into the memory of a single hardware accelerator.

In particular, the creation of these replacement layers leads to a local generation of each corresponding set of weights, which is defined at the higher network level; however, they are invoked at the replacement layer level and are therefore locally executed and stored. The fact that they are locally generated and stored inherently satisfies the requirements for an efficient access of the computing memory (RAM) assigned to each part. Particularly, for large-scale DNN models that are also distributed using a large number of parts, the proposed automated process for distributing neurons' allocation of weights and corresponding gradients allows for a transparent and easy to manage distribution of DNN's memory requirements and therefore their distributed training.

Embodiments may provide an elegant and easy to use distribution mechanism in which the inherently dense connectivity between neurons and weights is disentangled and decomposed from the outset into a desired number of sub-sets of neurons/weights. Each subset constitutes an individual part that is independent from the other subsets, except for the inputs which are the same for all subsets. Therefore, only one synchronisation per training cycle will be required, that corresponds to the input value and takes place prior to the local execution of each subset. During the local execution no exchange of any data is required.

The proposed approach may be hardware independent, i.e. embodiments may exploit the computational power of both conventional central processing units (CPUs) as well as current and emerging hardware accelerators, for example, GPUs, Intel® Xeon Phi™, FPGA, ASICs, etc.. Particularly, for training deep learning models with memory requirements that cannot fit into the memory of a single accelerator, the proposed method enables novel distribution to neural networks that is straightforward to use and easy to manage.

Embodiments may be applied, for example, in the areas of High Performance Computing (HPC), software, deep learning (DL) and artificial intelligence (AI).

In an embodiment of the method the transforming may include determining if the selected layer contains a bias unit and, if so, distributing weights corresponding to the bias unit of the selected layer across the N replacement layers.

In an embodiment of the method the transforming may include automatically determining the dimensions of the N replacement layers when the number of outputs of the selected layer is divisible by N. When the number of outputs of the selected layer is not divisible by N, the dimensions of the N replacement layers may be chosen manually by a user.

In an embodiment of the method the transforming may include automatically selecting a layer of the existing DNN for removal and replacement when the layer satisfies a predetermined criterion. Alternatively, or in addition, a layer of the existing DNN may be manually selected by a user for removal and replacement in the transformation process.

According to an embodiment of a second aspect there is provided a computer-implemented method of creating a trained DNN, which method comprises training an untrained DNN created by an embodiment of the first aspect.

According to an embodiment of a third aspect there is provided a computer program which, when run on a computer, causes that computer to carry out a method embodying the first aspect.

According to an embodiment of a fourth aspect there is provided apparatus to create a modified Deep Neural Network - DNN, the apparatus comprising: a transformer to transform an existing DNN by removing a selected layer of neurons of the existing DNN, the selected layer comprising a set of neurons having a defined statistical profile, and replacing the selected layer by N replacement layers of neurons, N being an integer greater than 1, the transformer comprising a layer replacer to create the replacement layers, each replacement layer comprising a different sub-set of the set of neurons of the selected layer such that the N replacement layers, and logical connections set between the N replacement layers and the remainder of the DNN, are in aggregate functionally equivalent within the DNN to the selected layer; and a weight initializer to set up the transformed DNN for execution, the weight initializer initializing the weights of the transformed DNN by generating weights locally and independently for each replacement layer with each replacement layer having the same defined statistical profile as the selected layer, whereby the N replacement layers are in aggregate statistically equivalent within the DNN to the selected layer. An embodiment of the apparatus may further comprise an outputter to output the transformed and initialized DNN to at least one processor and associated memory to execute each replacement layer independently.

In an embodiment of the apparatus the layer replacer may include a bias unit adder to determine if the selected layer contains a bias unit and, if so, distributing weights corresponding to the bias unit of the selected layer across the N replacement layers.

In an embodiment of the apparatus the transformer may include a dimension selector to determine the dimensions of the N replacement layers when the number of outputs of the selected layer is divisible by N and, if so, determine the dimensions of the N replacement layers automatically. The apparatus may further comprise a first user-operable inputter whereby, when the number of outputs of the selected layer is not divisible by N, the dimensions of the N replacement layers are inputable by a user of the apparatus.

In an embodiment of the apparatus the transformer may include a layer selector to automatically select a layer of the existing DNN for removal and replacement when the layer satisfies a predetermined criterion. Alternatively, or in addition, the apparatus may further comprise a second user-operable inputter whereby a layer of the existing DNN is selectable by a user of the apparatus for removal and replacement in the transformation process.

Reference will now be made, by way of example, to the accompanying drawings, in which:
Figure 1 (a) (described above) is a diagram depicting a serial execution of a combination of layers of a DNN;
Figure 1 (b) (described above) is a diagram depicting model distribution in respect of the layers of Figure 1(a);
Figure 2 shows diagrams for use in explaining how layers of an existing DNN may be replaced in accordance with an embodiment;
Figure 3 shows diagrams for use in explaining how the outputs of replacement layers may be combined;
Figure 4 is a flowchart for use in explaining a method according to an embodiment;
Figure 5A is a flowchart for use in explaining a transformation process of the method of Figure 4;
Figure 5B is a block diagram of apparatus according to an embodiment;
Figures 6(a), 6(b), 6(c) and 6(d) are diagrams for use in explaining different ways in which a layer could be transformed into a set of replacement layers according to an embodiment;
Figure 7 is a diagram depicting how a fully connected layer may be transformed into four replacement layers according to an embodiment;
Figure 8 is flowchart for use in explaining a weight initialization process of the method of Figure 4;
Figure 9 is a diagram depicting how a fully connected layer with a bias unit may be transformed into four replacement layers according to an embodiment;
Figures 10(a) and 10(b) are diagrams for use in explaining how layers in a specific DNN may be replaced according to an embodiment;
Figure 11 is a diagram for use in explaining how computation of individual layers may be offloaded to an accelerator; and
Figure 12 is a block diagram of a computing device suitable for carrying out a method of an embodiment.

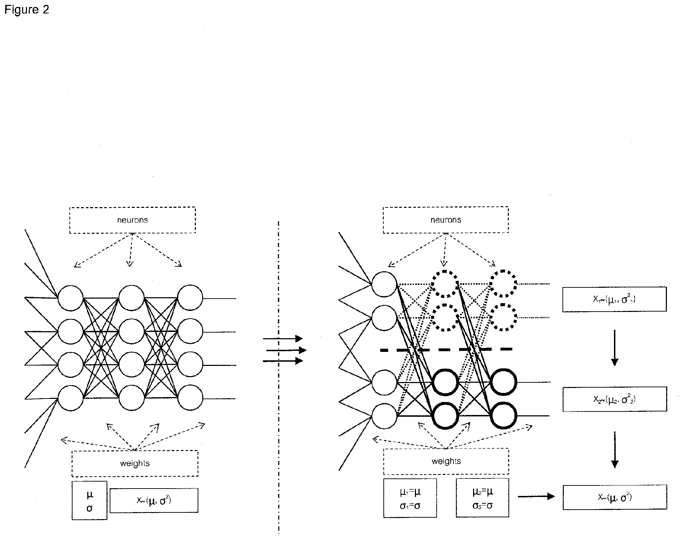

In a proposed embodiment, instead of generating one pool of random numbers for the overall set of weights required for connecting a layer's neurons to the next, as well as taking care of efficiently splitting the weights across the different parts, we first split the neurons that correspond to a layer's output. In Figure 2, this is shown for the case where the neurons of an original layer (left side of Figure) are evenly split into two parts (right side of Figure). Each set of weights that corresponds to each sub-set of neurons (represented in Figure 2 by the two types of broken lines) is then generated locally and independently for the different parts. That is, from the original layer that is uniquely defined by its statistical profile *X ~* (*µ,σ*²)*,* a number of new replacement layers are created: *Xᵢ ∼* (*µᵢ, σᵢ*²)*,* where *i*=1,···,*N* and N denotes the number of parts (in Figure 2, N=2). Each replacement layer is smaller in size than the original layer, i.e. has fewer neurons, and therefore weights and gradients, than the original layer; however, together the replacement layers are statistically equivalent to that of the original layer. By default, each new replacement layer has an identical statistical profile to that of the original layer, where *Xᵢ ∼* (*µᵢ, σᵢ*²) = *X ∼* (*µ, σ*²), *i*=1,···,*N*. Thus, by ensuring that the training processes for the original and replacement layers stem from the same statistical profile, eventually the training process of the now distributed DNN will also converge to that of the original DNN.

Each set of weights and gradients that correspond to a sub-set of neurons, where each sub-set is assigned to a different replacement layer, is locally generated. Therefore, when each sub-set of neurons is assigned for processing, the automatic generation of weights and corresponding gradients can be independently and locally executed for each sub-set of neurons.

Importantly, this local generation of the weights is defined at the higher network level; however, they are invoked at the replacement layer level and therefore locally stored. The fact that the weights and corresponding gradients are locally generated and stored inherently satisfies the requirements for an efficient access of the computing memory (RAM) allocated to each sub-set of neurons. That is, as a result of transforming a layer into sub-layers one can then execute each sub-layer independently, allowing smaller-sized portions of memory to be used at any given time. The creation of these sub-layers at a high level allows different deep learning (DL) frameworks to handle usage of the hardware without the need to modify how they interact with the hardware. Particularly, for large-scale DNN models that are also distributed using a large number of partitions (i.e. sub-set of neurons), the proposed automated process for distributing neurons' allocation of weights and corresponding gradients allows for an automated, transparent and easy to manage distribution of DNN's weights and corresponding gradients requirements and therefore their distributed training.

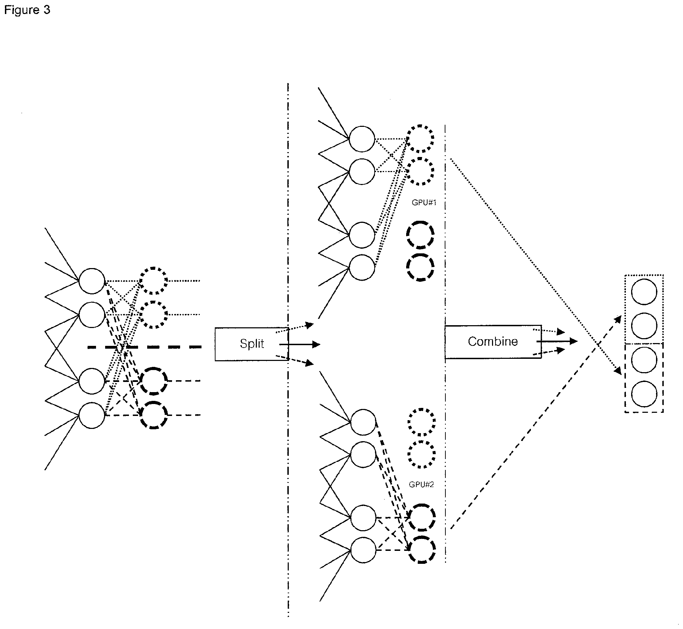

As illustrated schematically in Figure 3, a transfer of the neurons' output from the now 'split' and distributed sub-sets of neurons at every layer to every other sub-set of neurons needs to undergo a 'combine' step rendering them ready for processing in the next layer. These 'split' and 'combine' steps are performed independently for all parts.

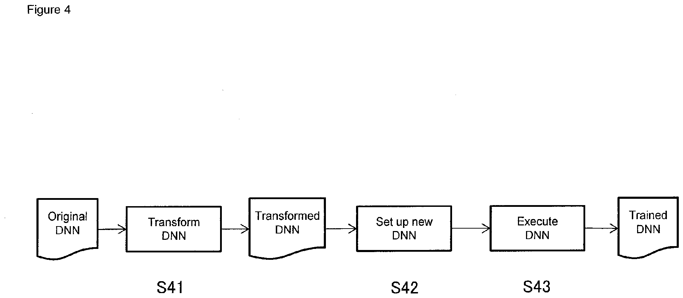

The overall processes proposed for distributing the memory requirements of DNNs is schematically presented in Figure 4. Given as input a DNN, the proposed process transforms it into an equivalent network (step S41) in which some, or all, of its layers are replaced by a number of smaller (i.e. having fewer neurons) but equivalent replacement layers that collectively result in a statistically equivalent network to that originally-supplied, but whose layers are computationally much cheaper to execute. Specifically, for each original layer being transformed, the aggregate of the new replacement layers holds the total number of weights and gradients thereof. After the network's model has been transformed, the setting-up stage (step S42) takes place, which includes locally initializing each set of weights of the newly-created replacement layers as per the statistical definition provided by the original layer. Finally, the DNN is ready for execution (step S43) rendering it suitable for use (or processing) within any arbitrary deep learning framework including, for example, TensorFlow™, Caffe™, Theano™, etc.

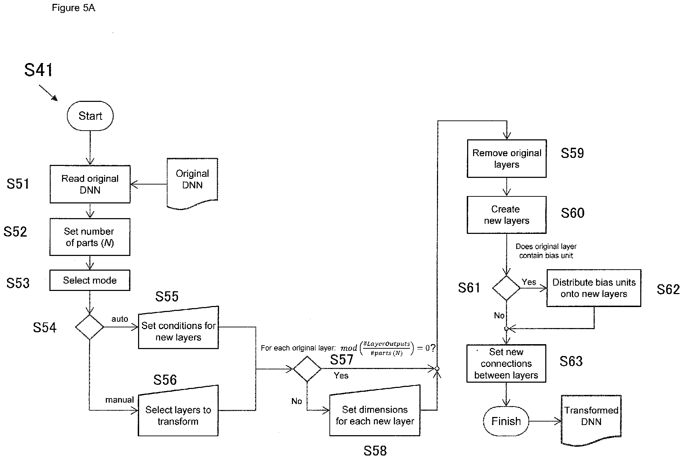

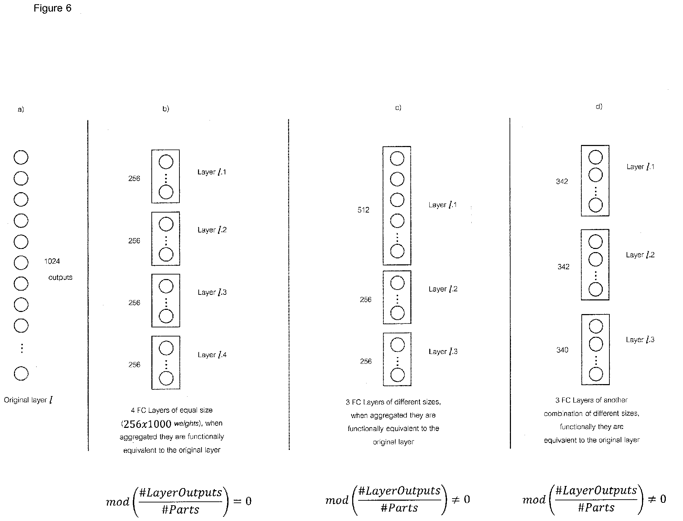

The transformation process of step S41 will now be described with reference to Figure 5A. The process starts in step S51 by reading the original DNN and step S52 determines the desired number of parts (N, an integer greater than 1). One of two transformation modes may be used, either automatic or manual (step S53). In the automatic transformation mode (step S54 - auto), the system automatically selects the layers to be transformed according to at least one first predetermined criterion (step S55), for example based on the total number of weights, or their percentage of execution with regards to the total processing time of the DNN (based on an execution profile). If the first predetermined criterion is satisfied, for example if the number of weights that correspond to a layer is larger than a certain value, this layer is automatically selected for transformation. Alternatively, in the manual transformation mode (step S54 - manual), the user selects the layers to be transformed. After the original layer(s) to be transformed have been selected, either automatically or manually, at step S57 a simple check is run for each selected original layer against a second predetermined criterion to determine how to select the dimensions of each of the new replacement layers that will be created, as follows: if the number of outputs is divisible by the number of target parts N (step S57 - Yes), it is determined automatically that N parts of equal size will be created and the process continues to step S59; if not (step S57 - No), the system reverts in step S58 to a manual mode that allows for setting the dimensions of each new replacement layer. More details on the dimension selection process are given below with reference to Figure 6.

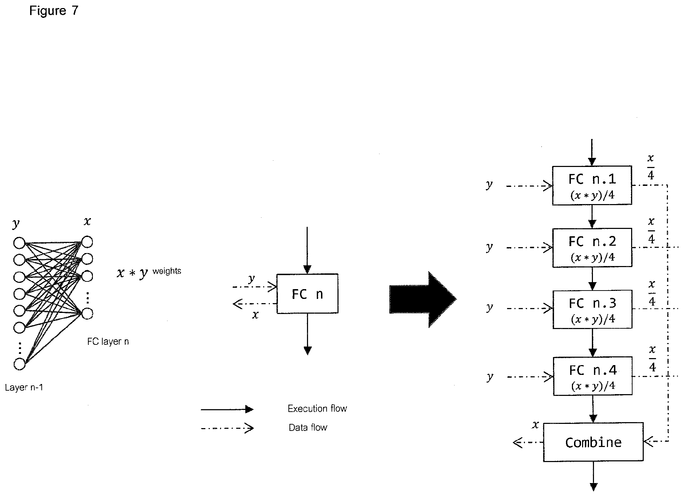

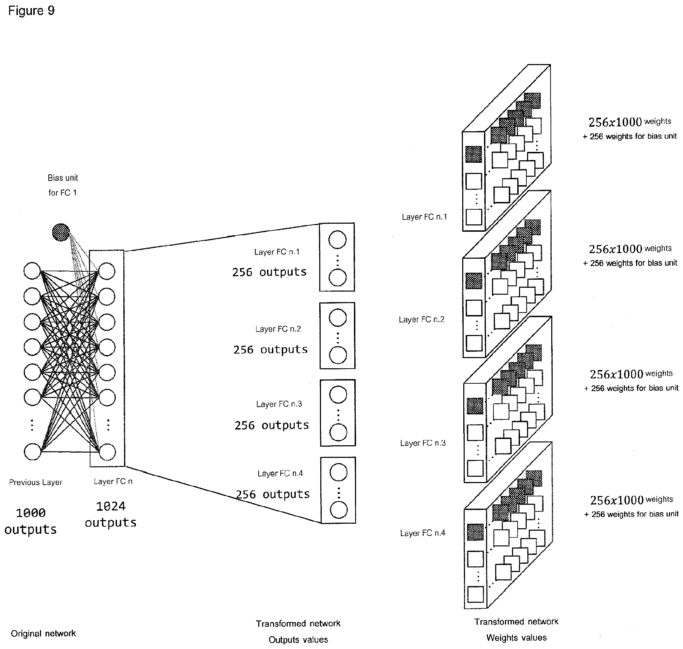

After the conditions for the creation of the replacement layers are confirmed, the process flow continues to the remaining stages. In step S59 of Figure 5A, the original layers being transformed are removed from the DNN, and in step S60 each set of replacement layers is created according to a dimension criterion (for example using one of the criteria described later with respect to Figure 6). As will also be described below with reference to Figure 9, if the original layer contains bias units (step S61 - Yes), bias units are also included in the newly-created layers that replace each original layer's bias units (step S62); however the bias units are now evenly distributed across the N parts. Obviously, in the case where the original layer does not have a bias unit, no bias unit distribution takes place (step S61 - No). This initial distribution constitutes part of the process necessary to ensure that the new set of layers is functionally equivalent to that of the original layer. Thereafter, once all the replacement layers are created, the last step (step S63) corresponds to setting a logical connection between the newly-created layers that mimics the original settings of the originally-supplied neural network. Effectively, as shown in Figure 7 (described later in more detail), where here N=4, for each pair of connected layers, in which at least one of them is transformed, this process automatically takes care of setting the relationship between the distributed parts, i.e. outputs, inputs, weights and corresponding gradients. Since the sub-sets of weights are each created locally and independently from each other, there is no restriction on the order in which each part of the newly-created layers has to be executed. Finally, as a result of this process flow, a distributed but equivalent DNN is created, which can be regarded as a transformed version of the original neural network.

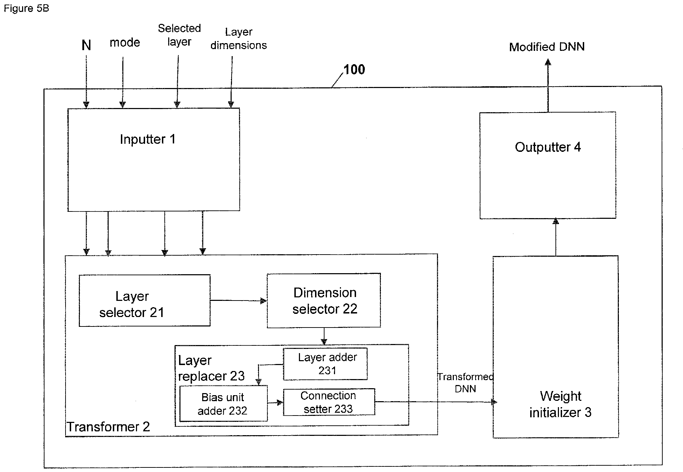

Figure 5B shows apparatus 100 for carrying out an embodiment of a method, including the transformation process described with reference to Figure 5A. Apparatus 100 comprises an inputter 1, a transformer 2, a weight initializer 3 and an outputter 4.

Inputter 1 (serving in this case as both the aforementioned first user-operable inputter and second user-operable inputter) is configured to receive input from a user of the apparatus 100, for example the number of replacement layers N to be created to replace a layer of neurons in an existing DNN.

Transformer 2 is configured to transform the existing DNN by carrying out the transformation process described above, in which a selected layer of neurons of the existing DNN is removed from the DNN and replaced by N replacement layers of neurons. The transformer 2 comprises a layer selector 21, a dimension selector 22 and a layer replacer 23.

When a user of the apparatus has selected "automatic" mode through inputter 1, the layer selector 21 is operable to automatically select those layers of the existing DNN for removal and replacement which satisfy the first predetermined criterion. Alternatively, when the user has selected "manual" mode through inputter 1, layers of the existing DNN are selectable by a user of the apparatus for removal and replacement in the transformation process.

Dimension selector 22 is configured to determine if the number of outputs of the selected layer is divisible by N and, if so, determine the dimensions of the N replacement layers automatically. When the number of outputs of the selected layer is not divisible by N, the dimensions of the N replacement layers are input to the transformer by a user of the apparatus through inputter 1.

Layer replacer 23 is configured to create the replacement layers, each replacement layer comprising a different sub-set of the set of neurons of the selected layer such that the N replacement layers, and logical connections set between the N replacement layers and the remainder of the DNN, are in aggregate functionally equivalent within the DNN to the selected layer. Layer replacer 23 comprises a layer adder 231, a bias unit adder 232 and a connection setter 233. Layer adder 231 is configured to remove the original layer from the existing DNN, create the required replacement layers and insert them into the DNN in place of the original layer. Bias unit adder 231 is configured to determine if the layer being replaced contains a bias unit and, if so, to distribute weights corresponding to the bias unit of that layer across the N replacement layers. Connection setter 233 is configured to set a logical connection between the newly-created replacement layers that mimics the original settings of the original DNN.

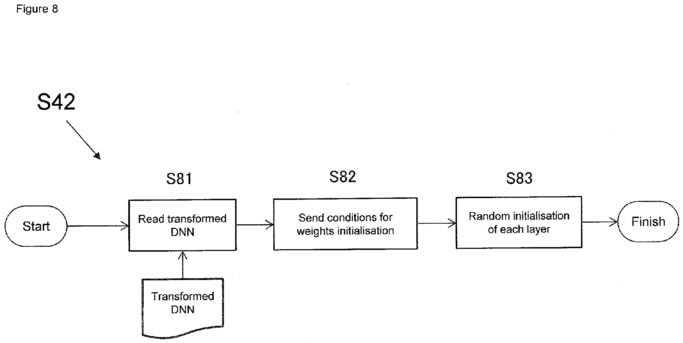

Weight initializer 3 is configured to carry out a weight initialization process to initialise the weights of the transformed DNN. In the weight initialization process, described in more detail later with reference to Figure 8, weights are generated locally and independently for each replacement layer such that each replacement layer is defined by the same statistical profile as the selected layer, whereby the N replacement layers are in aggregate statistically equivalent within the DNN to the selected layer.

Outputter 4 is configured to output the DNN as modified by the transformation and weight initialization processes to at least one processor and associated memory to execute each replacement layer independently.

Figure 6 depicts different ways in which, for example, a fully connected layer could be transformed into a set of replacement layers that are equivalent in functionality to that of the original. As indicated at step S57 of Figure 5, the size of each replacement layer is set automatically or manually, in dependence upon the result of the division between the number of outputs of the original layer and the number of replacement layers to be created. Therefore, regardless of the transformation process (automatic or manual), it is also possible to set different dimensions for each replacement layer, as shown in Figure 6. Figure 6(a) shows the original layer, which in this example has 1024 outputs. Different criteria for distributing the weights between the layers are shown in Figures 6(b) to 6(d) as follows: 6(b) four replacement layers of equal size (each having 256 outputs in this example); 6(c) three replacement layers of different size (in this example, one replacement layer has 512 outputs, the other two 256 each); 6(d) three replacement layers of similar but not equal size (in this example, one replacement layer has 340 outputs, the other two have 342 each).

Figure 7 shows how a fully connected layer FC n may be transformed into N=4 parts, i.e. four serially, but independently, executable replacement layers. Execution flow is represented by solid arrows, whilst data flow is represented by dotted arrows. The original layer FC n receives an input of size y that produces an output of size x. Given the condition that the original layer FC n is transformed into four identically-sized replacement layers each smaller in size than the original layer, each of the replacement layers receives exactly the same input, y, however each will produce an output that is four times smaller than that of the original layer, i.e. an output x/4. Therefore, each replacement layer holds a quarter of the original weights and corresponding gradients. Thereafter, these layers' outputs are combined in order to provide an equivalent functionality to that of the original layer, which is typically a concatenation of the outputs produced from each replacement layer.

Going back to step S42 of Figure 4, once the original DNN has been transformed in step S41, it is necessary to ensure that the initialisation of the weights for the replacement layers is equivalent to the initialisation of the original one, therefore guaranteeing that the mathematical optimisation problem executed by the transformed neural network starts with equivalent conditions to that of the original network. Figure 8 illustrates this process, which begins at step S81 with reading the already transformed network. In step S82 conditions for initialising the weights of each part of the replacement layers are sent. Random initialisation is carried out in step S83 such that, for each original layer defined by *X ∼* (*µ,σ*²) that is being transformed into N replacement layers, each of the replacement layers is also defined by *Xᵢ ∼* (*µᵢ, σᵢ*²)= *X ∼* (*µ,σ*²), where *i*=1,···,*N*.

Figure 9 illustrates how a fully connected layer FC n may be transformed into four replacement layers FC n.1, FC n.2, FC n.3, FC n.4 of equal size. The even distribution includes the partitioning of outputs, bias units, weights and corresponding gradients. As mentioned before, the set of replacement layers corresponding to an original layer has to have the same number of bias units as the original layer. Figure 9 shows how the weights may be distributed per replacement layer, where the weights that correspond to the original bias unit are also allocated to each part of the replacement layers, which are evenly distributed. In this way it is possible to ensure that the new set of replacement layers is equivalent to that of the original one. The original layer FC n, with weights that correspond to 1000 x 1024 plus 1024 bias connections, is transformed into four replacement layers that hold ((1000x1024)+1024)/N, N=4, of the total number of weights that correspond to the original layer.

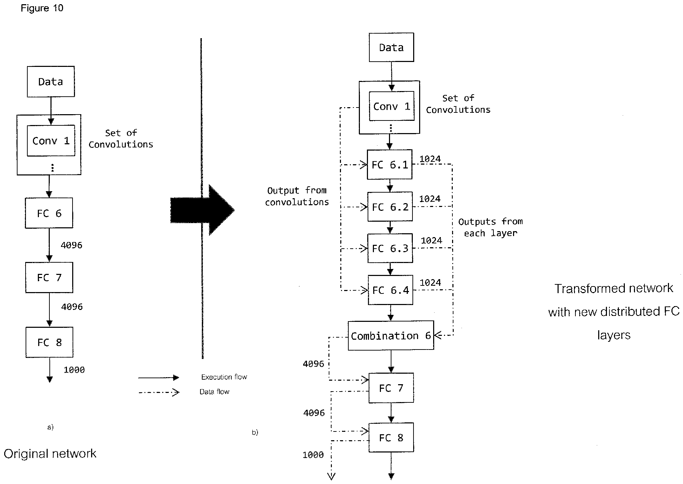

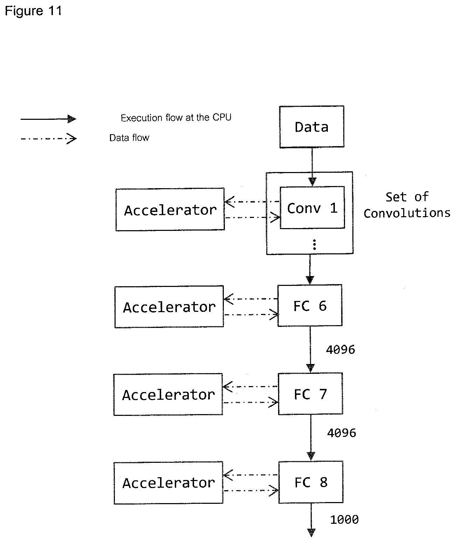

An example of how an embodiment may be applied to an existing DNN will now be described with reference to Figure 10 which illustrates how some parts of a well-known DNN, AlexNet (http://papers.nips.cc/paper/4824-imagenet-classification-with-deep-convolutional-neural-networks.pdf), may be transformed. As shown at Figure 10(a), the illustrated portion of the DNN comprises a convolutional layer and three fully connected layers FC6, FC 7 and FC8. In this case, the layer named FC6, which originally has 4096 outputs, is transformed into four smaller replacement layers, having 1024 outputs each. Therefore, the weights of the original FC6 layer are effectively distributed into four smaller layers, where the combination of them creates an equivalent output to that of the original layer FC6. In this way, the possibility of training the networks onto accelerators by means of model-distribution is enabled, particularly, when using hardware accelerators in which the memory resources are very limited. It is noted for completeness that, if the memory is not large enough to hold the entire network's model, but it is large enough to hold the weights and data corresponding to each layer on its own, it may be also possible to offload the computation of one layer at a time to the accelerator, for example as schematically illustrated in Figure 11. However, in the critical scenario that an accelerator may not even have enough memory to hold the weights and data corresponding to a single layer, splitting layers into multiple replacement layers of smaller size is a highly efficient solution, particularly since the creation of these new layers leads to local generation, storage and execution of each corresponding set of weights and gradients.

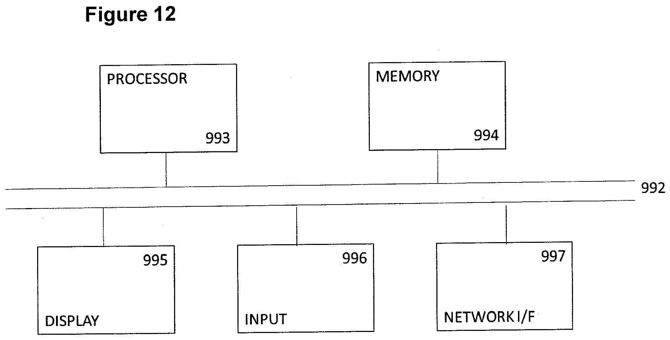

Figure 12 is a block diagram of a computing device, such as a data storage server, which embodies the present invention, and which may be used to implement some or all of the steps of a method embodying the present invention, and perform some or all of the tasks of apparatus of an embodiment. For example, the computing device of Figure 12 may be used to implement all, or only some, of steps S41 to S43 of the method illustrated in Figure 4, and to perform some or all of the tasks of the inputter 1, layer selector 21, dimension selector 22, layer replacer 23, weight initializer 3 and outputter 4 of the apparatus illustrated in Figure 5B.

The computing device comprises a processor 993, and memory, 994. Optionally, the computing device also includes a network interface 997 for communication with other such computing devices, for example with other computing devices of invention embodiments.

For example, an embodiment may be composed of a network of such computing devices. Optionally, the computing device also includes one or more input mechanisms such as keyboard and mouse 996, and a display unit such as one or more monitors 995. The components are connectable to one another via a bus 992.

The memory 994 may include a computer readable medium, which term may refer to a single medium or multiple media (e.g., a centralized or distributed database and/or associated caches and servers) configured to carry computer-executable instructions or have data structures stored thereon. Computer-executable instructions may include, for example, instructions and data accessible by and causing a general purpose computer, special purpose computer, or special purpose processing device (e.g., one or more processors) to perform one or more functions or operations. Thus, the term "computer-readable storage medium" may also include any medium that is capable of storing, encoding or carrying a set of instructions for execution by the machine and that cause the machine to perform any one or more of the methods of the present disclosure. The term "computer-readable storage medium" may accordingly be taken to include, but not be limited to, solid-state memories, optical media and magnetic media. By way of example, and not limitation, such computer-readable media may include non-transitory computer-readable storage media, including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices).

The processor 993 is configured to control the computing device and execute processing operations, for example executing computer program code stored in the memory 994 to implement some or all of the methods described with reference to Figures 4, 5A and/or 8 and defined in the claims. For example, processor 993 may execute computer program code to implement each of steps S41 to S43 of Figure 4, or only step S41 in whole or in part, or only steps S42 and S43 of Figure 4, or each or only some of steps S51 to S63 of Figure 5A, or each or only some of steps S81 to S83 of Figure 8.

The memory 994 stores data being read and written by the processor 993. As referred to herein, a processor may include one or more general-purpose processing devices such as a microprocessor, central processing unit, or the like. The processor may include a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor may also include one or more special-purpose processing devices such as an application specific integrated circuit (ASIC), a field programmable gate array (FPGA), a digital signal processor (DSP), network processor, or the like. In one or more embodiments, a processor is configured to execute instructions for performing the operations and steps discussed herein.

The display unit 995 may display a representation of data stored by the computing device and may also display a cursor and dialog boxes and screens enabling interaction between a user and the programs and data stored on the computing device. The input mechanisms 996, which may serve as inputter 1, may enable a user to input data and instructions to the computing device.

The network interface (network I/F) 997 may be connected to a network, such as the Internet, and is connectable to other such computing devices via the network. The network I/F 997 may control data input/output from/to other apparatus via the network. Other peripheral devices such as microphone, speakers, printer, power supply unit, fan, case, scanner, trackerball etc may be included in the computing device.

Methods embodying the present invention may be carried out on a computing device such as that illustrated in Figure 12. Such a computing device need not have every component illustrated in Figure 12, and may be composed of a subset of those components. A method embodying the present invention may be carried out by a single computing device in communication with one or more data storage servers via a network. The computing device may be a data storage itself storing at least a portion of the data.

A method embodying the present invention may be carried out by a plurality of computing devices operating in cooperation with one another. One or more of the plurality of computing devices may be a data storage server storing at least a portion of the data.

Embodiments may be implemented in hardware, or as software modules running on one or more processors, or on a combination thereof. That is, those skilled in the art will appreciate that a microprocessor or digital signal processor (DSP) may be used in practice to implement some or all of the functionality described above.

The invention may also be embodied as one or more device or apparatus programs (e.g. computer programs and computer program products) for carrying out part or all of the methods described herein. Such programs embodying the present invention may be stored on computer-readable media, or could, for example, be in the form of one or more signals. Such signals may be data signals downloadable from an Internet website, or provided on a carrier signal, or in any other form.

The above-described embodiments of the present invention may advantageously be used independently of any other of the embodiments or in any feasible combination with one or more others of the embodiments.

## Claims

1. A computer-implemented method of creating a modified Deep Neural Network - DNN, wherein the method comprises carrying out:
firstly, transforming an existing DNN by removing from the DNN a selected layer of neurons of the existing DNN, the selected layer comprising a set of neurons having a defined statistical profile, and replacing the selected layer by N replacement layers of neurons, N being an integer greater than 1, each replacement layer comprising a different sub-set of the set of neurons of the selected layer such that the N replacement layers, and logical connections set between the N replacement layers and the remainder of the DNN, are in aggregate functionally equivalent within the DNN to the selected layer; and
secondly, setting up the transformed DNN for execution comprising initializing the weights of the transformed DNN by generating weights locally and independently for each replacement layer with each replacement layer having the same defined statistical profile as the selected layer, whereby the N replacement layers are in aggregate statistically equivalent within the DNN to the selected layer.

2. A method as claimed in claim 1, further comprising outputting the transformed and initialized DNN to at least one processor and associated memory to execute each replacement layer independently.

3. A method as claimed in claim 1 or 2, wherein transforming includes determining if the selected layer contains a bias unit and, if so, distributing weights corresponding to the bias unit of the selected layer across the N replacement layers.

4. A method as claimed in claim 2 or 3, wherein the transforming includes automatically determining the dimensions of the N replacement layers when the number of outputs of the selected layer is divisible by N.

5. A method as claimed in claim 4, wherein, when the number of outputs of the selected layer is not divisible by N, the dimensions of the N replacement layers are chosen manually.

6. A method as claimed in any preceding claim, wherein the transforming includes automatically selecting a layer of the existing DNN for removal and replacement when the layer satisfies a predetermined criterion.

7. A method as claimed in any one of claims 1 to 5, wherein a layer of the existing DNN is manually selected for removal and replacement in the transforming.

8. A computer-implemented method of creating a trained DNN, which method comprises:
training an untrained DNN created by the method of any preceding claim.

9. A computer program which, when run on a computer, causes that computer to carry out a method as claimed in any preceding claim.

10. Apparatus to create a modified Deep Neural Network - DNN, the apparatus comprising:
a transformer to transform an existing DNN by removing a selected layer of neurons of the existing DNN, the selected layer comprising a set of neurons having a defined statistical profile, and replacing the selected layer by N replacement layers of neurons, N being an integer greater than 1, the transformer comprising a layer replacer to create the replacement layers, each replacement layer comprising a different sub-set of the set of neurons of the selected layer such that the N replacement layers, and logical connections set between the N replacement layers and the remainder of the DNN, are in aggregate functionally equivalent within the DNN to the selected layer; and
a weight initializer to set up the transformed DNN for execution, the weight initializer initializing the weights of the transformed DNN by generating weights locally and independently for each replacement layer with each replacement layer having the same defined statistical profile as the selected layer, whereby the N replacement layers are in aggregate statistically equivalent within the DNN to the selected layer.

11. Apparatus as claimed in claim 10, further comprising an outputter to output the transformed and initialized DNN to at least one processor and associated memory to execute each replacement layer independently.

12. Apparatus as claimed in claim 10 or 11, wherein the layer replacer includes a bias unit adder to determine if the selected layer contains a bias unit and, if so, to distribute weights corresponding to the bias unit of the selected layer across the N replacement layers.

13. Apparatus as claimed in claim 10, 11 or 12, wherein the transformer includes a dimension selector to determine if the number of outputs of the selected layer is divisible by N and, if so, determine the dimensions of the N replacement layers automatically.

14. Apparatus as claimed in claim 13, further comprising a first user-operable inputter whereby, when the number of outputs of the selected layer is not divisible by N, the dimensions of the N replacement layers are inputable to the transformer by a user of the apparatus.

15. Apparatus as claimed in any one of claims 10 to 14, further comprising a second user-operable inputter whereby a layer of the existing DNN is selectable by a user of the apparatus for removal and replacement in the transformation process.
